# EUROPÄISCHE PATENTSCHRIFT

(11) **EP 3 973 391 B1**
(45) Veröffentlichungstag und Bekanntmachung des Hinweises auf die Patenterteilung: **19.07.2023**
(21) Anmeldenummer: 20723053.3
(22) Anmeldetag: 27.04.2020
(51) Int. Cl.: G06F 9/455, G06F 9/50

(54) **KRAFTFAHRZEUG-COMPUTERSYSTEM MIT HYPERVISOR SOWIE KRAFTFAHRZEUG**
MOTOR VEHICLE COMPUTER SYSTEM WITH HYPERVISOR, AND MOTOR VEHICLE
SYSTÈME INFORMATIQUE DE VÉHICULE AUTOMOBILE AVEC HYPERVISEUR AINSI QUE VÉHICULE AUTOMOBILE

(30) Priorität: 24.06.2019 DE 102019209086
(43) Veröffentlichungstag der Anmeldung: 30.03.2022
(73) Patentinhaber: Audi AG, 85045 Ingolstadt (DE)
(72) Erfinder: LERZER, Jürgen, 92318 Neumarkt (DE); DALKE, Christoph, 85110 Kipfenberg (DE)
(74) Vertreter: Hofstetter, Schurack & Partner
(86) Internationale Anmeldenummer: PCT/EP2020/061587
(87) Internationale Veröffentlichungsnummer: WO 2020/259897

(56) Entgegenhaltungen:
- US-A1- 2012 084 777
- US-A1- 2018 088 997
- US-B2- 9 753 770
- Anonymous: "Performance Best Practices for VMware vSphere 6.7", , 27. Juli 2018 (2018-07-27), XP055714231, Palo Alto, CA, USA Gefunden im Internet: URL:https://www.vmware.com/content/dam/dig italmarketing/vmware/en/pdf/techpaper/perf ormance/vsphere-esxi-vcenter-server-67-per formance-best-practices.pdf [gefunden am 2020-07-13]
- Dulcardo Arteaga ET AL: "Cooperative Virtual Machine Scheduling on Multi-core Multi-threading Systems — A Feasibility Study", Workshop on Micro Architectural Support for Virtualization, Data Center Computing, and Cloud, 31 December 2010 (2010-12-31), XP055709989, Retrieved from the Internet: URL:https://pdfs.semanticscholar.org/1471/ 23ea99c26b5e1af040a1f11941f18d267c91.pdf [retrieved on 2020-06-30]

## Beschreibung

Die Erfindung betrifft ein Computersystem für ein Kraftfahrzeug. Das Computersystem kann eine Prozessoreinrichtung mit mehreren Prozessorkernen sowie eine Hypervisoreinrichtung aufweisen. Mittels der Hypervisoreinrichtung können mehrere virtuelle Maschinen auf den Prozessorkernen gleichzeitig ausgeführt werden. Zu der Erfindung gehört auch ein Kraftfahrzeug mit einem solchen Computersystem.

In einem Kraftfahrzeug kann zum Ausführen mehrerer Softwareprogramme vorgesehen sein, eine Prozessoreinrichtung mit mehreren Prozessorkernen zu betreiben. Eine solche Prozessoreinrichtung kann dabei aus einem einzigen Prozessorchip (CPU - Central Processing Unit) oder einem Verbund aus mehreren Prozessorchips gebildet sein. Um die Softwareprogramme getrennt nach unterschiedlichen Kategorien, beispielsweise Zuverlässigkeit bei der Ausführung (safety) und/oder Schutz gegen Manipulierbarkeit (security) ausführen zu können, kann vorgesehen sein, virtuelle Maschinen zu betreiben, in denen dann jeweils eines oder einige der Softwareprogramme ausgeführt werden. Eine virtuelle Maschine stellt dabei einen virtuellen Computer dar, das heißt es handelt sich um ein Softwarepaket, in welchem zumindest ein virtueller Prozessorkern sowie ein auf dem zumindest einen virtuellen Prozessorkern ausführbares Betriebssystem enthalten sein kann.

Die Verwendung eines Computersystems mit virtuellen Maschinen in einem Kraftfahrzeug ist beispielsweise aus der DE 10 2013 007 676 A1 bekannt. Darin ist der Vorteil beschrieben, dass mittels der virtuellen Maschinen eine Kapselung von Softwareprogrammen gegeneinander ermöglicht ist.

Um die mehreren virtuellen Maschinen auf der Prozessoreinrichtung betreiben zu können, ist bekannt, einen sogenannten Hypervisor oder eine Hypervisoreinrichtung bereitzustellen. Eine solche Hypervisoreinrichtung ist dazu eingerichtet, die virtuellen Maschinen auf der Prozessoreinrichtung gleichzeitig zu betreiben und hierzu die realen Prozessorkerne der Prozessoreinrichtung den virtuellen Maschinen gemäß einem vorbestimmten Zuordnungsschema zuzuordnen. Mit anderen Worten wird also pro virtueller Maschine jeweils zumindest ein realer Prozessorkern der Prozessoreinrichtung fest zugeordnet. Diese Zuordnung ist in der Regel fix, das heißt ein realer Prozessorkern der Prozessoreinrichtung bleibt im Verlauf des Betriebs des Computersystems genau einer virtuellen Maschine zugeordnet.

Dies kann zu dem Nachteil führen, dass für den Fall, dass in einer virtuellen Maschine ein dort ausgeführtes Softwareprogramm für einen bestimmten Zeitabschnitt eine große Rechenleistung benötigt, diese Rechenleistung nur durch den zumindest einen realen Prozessorkern der Prozessoreinrichtung bereitgestellt werden kann, der durch die fixe Zuordnung in der virtuellen Maschine ohnehin verfügbar ist. Selbst wenn eine andere virtuelle Maschine gerade wenig Rechenleistung benötigt, also der dieser virtuellen Maschine zugeordnete zumindest eine Prozessorkern nur teilweise ausgelastet ist, kann die verbleibende Rechenleistung nicht für eine virtuelle Maschine mit dem hohen Bedarf an Rechenleistung genutzt werden.

Aus der DE 10 2012 205 301 A1 ist ein Fahrzeug-Computersystem mit einem Hypervisor beschrieben. Des Weiteren ist beschrieben, dass die unterschiedlichen virtuellen Maschinen, die auf den Prozessorkernen des Computersystems gleichzeitig ausgeführt werden, gemeinsam auf eine Ein-Ausgabeeinheit zugreifen können, indem die Hypervisoreinrichtung die Ein-Ausgabeeinheit als virtuelle Ein-Ausgabeeinheit in jeder der virtuellen Maschinen abbildet oder darstellt. Eine optimierte Aufteilung der verfügbaren Rechenleistung ergibt sich hierbei allerdings nicht.

Aus der DE 10 2013 226 700 A1 ist bekannt, dass eine Hardwareressource, wie beispielsweise ein Zugang zu einem Endgerät, exklusiv und durchgehend nur einer virtuellen Maschine eines Computersystems eines Kraftfahrzeugs zugeordnet wird und dass eine Datenübertragung zwischen zwei virtuellen Maschinen durch eine Hypervisoreinrichtung ermöglicht werden kann.

Aus der US 2018/0088997 A1 sind Systeme und Verfahren bekannt, die eine Energieverwaltungsschaltung bereitstellen, die einen oder mehrere Cache-Parameter einer Anwendung oder einer VM bei einer Bestimmung eines pCPU-vCPU-Kern-Remappings berücksichtigt.

Aus der US 2012/0084777 A1 ist eine virtuelle Maschine und/oder eine Multi-Level-Planungsunterstützung auf Systemen mit asymmetrischen Prozessorkernen bekannt.

Aus der US 9 753 770 B2 ist bekannt, mehrere Verarbeitungsaufgaben auf mehreren physischen Prozessorkernen auszuführen, die Allzweckregister und Spezialregister unterstützen. Ein jeweiliger Nutzungsgrad, mit denen die Verarbeitungsaufgaben die Spezialregister verwenden, werden geschätzt. Die physischen Prozessorkerne werden den Verarbeitungsaufgaben auf Grundlage des geschätzten Nutzungsgrads des Spezialregisters zugewiesen.

Der Erfindung liegt die Aufgabe zugrunde, bei einem Computersystem eines Kraftfahrzeugs die verfügbare Rechenleistung mehrerer Prozessorkerne auf virtuelle Maschinen des Computersystems aufzuteilen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Computersystem für ein Kraftfahrzeug bereitgestellt. Das Computersystem weist eine Prozessoreinrichtung mit mehreren reale Prozessorkernen auf. Diese Prozessorkerne sind hier als reale Prozessorkerne bezeichnet, das heißt sie sind tatsächlich schaltungstechnisch realisiert (als integrierte Schaltkreise) und nicht nur als virtuelle Prozessorkerne softwarebasiert vorhanden. Die Prozessoreinrichtung kann auf einer CPU oder einem Cluster aus mehreren CPUs basieren, wobei jede CPU einen Prozessorkern oder mehrere der Prozessorkerne aufweisen kann.

In dem Computersystem sind des Weiteren mehrere virtuelle Maschinen bereitgestellt, von denen jede jeweils zumindest einen virtuellen Prozessorkern zum Ausführen von Softwareprogrammen aufweist. Mit anderen Worten sind in dem Computersystem als virtuelle Maschinen jeweilige Softwarepakete bereitgestellt, die mittels der Prozessoreinrichtung betrieben oder ausgeführt werden können. Eine solche betriebene oder ausgeführte virtuelle Maschine stellt dann innerhalb der virtuellen Maschine eine vorbestimmte, feste Anzahl an virtuellen Prozessorkernen bereit, auf dem oder auf denen ein Betriebssystem der virtuellen Maschine ausgeführt wird. Hierbei ist insgesamt vorgesehen, dass eine Gesamtanzahl der virtuellen Prozessorkerne (alle virtuellen Maschinen zusammengenommen) größer ist als eine Gesamtanzahl der realen Prozessorkerne der Prozessoreinrichtung. Mit anderen Worten lässt sich zu einem gegebenen Zeitpunkt also nicht jedem virtuellen Prozessorkern genau ein realer Prozessorkern zuordnen.

Für den Betrieb der virtuellen Maschinen auf der Prozessoreinrichtung ist eine Hypervisoreinrichtung (auch Hypervisor oder Virtualisierungsschicht genannt) vorgesehen. Die Hypervisoreinrichtung ist dazu eingerichtet, die virtuellen Maschinen auf der Prozessoreinrichtung gleichzeitig zu betreiben und hierzu die realen Prozessorkerne den virtuellen Maschinen gemäß einem vorbestimmten Zuordnungsschema exklusiv zuzuordnen. Exklusiv bedeutet hier, dass zu einem gegebenen Zeitpunkt ein realer Prozessorkern nur genau einer virtuellen Maschine zugeordnet ist. Mit anderen Worten teilen sich virtuelle Maschinen zu keinem Zeitpunkt keinen Prozessorkern. Durch das Zuordnen ist in jeder virtuellen Maschine eine Rechenleistung von deren zumindest einen virtuellen Prozessorkern dadurch festgelegt oder bestimmt, dass der zumindest eine virtuelle Prozessorkern durch den zumindest einen realen Prozessorkern, welcher dieser virtuellen Maschine exklusiv zugeordnet ist, realisiert oder betrieben ist. Es kann also beispielsweise vorgesehen sein, dass ein virtueller Prozessorkern einer virtuellen Maschine durch einen realen Prozessorkern versorgt oder umgesetzt wird oder die Rechenleistung des realen Prozessorkerns abbildet oder widerspiegelt. Dann ist die Rechenleistung des virtuellen Prozessorkerns gleich der Rechenleistung des realen Prozessorkerns. Es kann aber auch sein, dass mehr nur ein virtueller Prozessorkern durch einen einzelnen realen, gemeinsamen Prozessorkern mit Rechenleistung versorgt oder durch einen realen Prozessorkern realisiert wird. Dann ist die Rechenleistung pro virtuellem Prozessorkern kleiner als die Rechenleistung des realen Prozessorkerns. Es kann auch vorgesehen sein, dass für einen einzelnen virtuellen Prozessorkern zwei oder mehr als zwei reale Prozessorkerne vorgesehen sind, sodass also dann der virtuelle Prozessorkern mehr Rechenleistung aufweist als ein einzelner realer Prozessorkern.

Um nun die Rechenleistung der virtuellen Prozessorkerne der virtuellen Maschinen anpassen zu können, ist erfindungsgemäß in der Hypervisoreinrichtung ein Hypervisorscheduler bereitgestellt. Ein Scheduler umfasst eine Schaltung und/oder eine Software, die in Abhängigkeit von einem Bedarf an Rechenleistung oder allgemein in Abhängigkeit von einer Scheduling-Vorschrift die Aufteilung der realen Prozesskerne auf die virtuellen Maschinen im Betrieb anpassen kann. Im Zusammenhang mit der Hypervisoreinrichtung ist nun ein Hypervisorscheduler vorgesehen, durch welchen zusätzlich zu dem besagten Zuordnungsschema (Zuordnung der realen Prozessorkerne zu den virtuellen Maschinen gemäß einer vorgegebenen Konfiguration) zusätzlich zumindest ein weiteres Zuordnungsschema bereitgestellt ist, welches eine andere oder weitere exklusive Zuordnung der realen Prozessorkerne zu den virtuellen Maschinen vorsieht. Mit anderen Worten gibt es zumindest zwei unterschiedliche Zuordnungsschemata. Jedes Zuordnungsschema legt fest, welcher reale Prozessorkern welcher virtuellen Maschine zum Betreiben von deren virtuellen Prozessorkernen zugeordnet oder verwendet wird. Der Hypervisorscheduler ist nun dazu eingerichtet, zwischen den Zuordnungsschemata in Abhängigkeit von einem Bedarfssignal im Betrieb des Computersystems umzuschalten. Durch das Bedarfssignal wird also vorgegeben, welches der Zuordnungsschemata in der Hypervisoreinrichtung aktuell eingestellt werden soll. Durch Einstellen oder Aktivieren eines Zuordnungsschemas wird dann entsprechend die Zuordnung der realen Prozessorkerne zu den virtuellen Maschinen gemäß dem ausgewählten Zuordnungsschema eingestellt.

Des Weiteren ist eine der virtuellen Maschinen dazu eingerichtet, eine Anzeigeeinrichtung zu betreiben, beispielsweise einen Bildschirm oder ein Head-up-Display (Kopf-oben-Anzeige). Hierzu weist die virtuelle Maschine ein Anzeigesteuerprogramm auf, also ein Softwareprogramm, das dazu eingerichtet ist, auf einer Anzeigeeinrichtung einen Bildinhalt auf der Grundlage von Graphikdaten einzustellen. Der Bildinhalt kann beispielsweise pixelbasiert sein und die Graphikdaten können die Pixelwerte (Farbe und/oder Helligkeit) für die Pixel des Bildinhalts festlegen. Zum Erzeugen der Graphikdaten sind in den virtuellen Maschinen Applikationsprogramme vorgesehen, das heißt die Graphikdaten können von mehr als einem Applikationsprogramm erzeugt werden. Das Anzeigesteuerprogramm kann dann die Graphikdaten der unterschiedlichen Applikationsprogramme kombinieren oder zusammenfügen oder überlagern, was nach einem vorgegebenen Anzeigeschema durchgeführt werden kann. Das Anzeigesteuerprogramm ist dabei dazu eingerichtet, auf der Grundlage einer vorbestimmten Anteilsberechnungsvorschrift einen jeweiligen Mitwirkungsanteil oder Anteil der Applikationsprogramme an dem Bildinhalt zu ermitteln und mittels des Bedarfssignals die Rechenleistung gemäß dem jeweiligen ermittelten Mitwirkungsanteil auf die virtuellen Maschinen aufzuteilen, indem ein passendes Zuordnungsschema mittels des Bedarfssignals ausgewählt wird. Das Anzeigesteuerprogramm ermittelt also, welches Applikationsprogramm zu welchem Anteil an der Erzeugung des Bildinhalts mitwirkt, also wie groß der Rechenaufwand des jeweiligen Applikationsprogramms ist. Je größer der Mitwirkungsanteil eines Applikationsprogramms ist, desto mehr Rechenleistung benötigt es. Entsprechend wird dann mittels des Bedarfssignals ein Zuordnungsschema ausgewählt, durch welches an die virtuelle Maschine, die das jeweilige Applikationsprogramm betreibt oder ausführt, Rechenleistung entsprechend dem Mitwirkungsanteil zugeteilt wird. Das besagte Anzeigesteuerprogramm zum Steuern der Anzeigeeinrichtung kann dann beispielsweise auch das besagte Softwareprogramm sein, welches über die Steuerschnittstelle das Bedarfssignal an die Hypervisoreinrichtung ausgibt. Wenn Anzeigesteuerprogramm also das Bedarfssignal ermittelt hat, übermittelt es dieses über die Steuerschnittstelle an die Hypervisoreinrichtung.

Somit wird eine Hypervisoreinrichtung geschaffen, die nicht nur einmalig beim Start eine statische Zuordnung oder Bindung von realen Prozessorkernen zu virtuellen Maschinen vorsieht, sondern die Hypervisoreinrichtung ist im Betrieb umschaltbar und weist hierzu den Hypervisorscheduler auf, der zwischen unterschiedlichen Zuordnungsschemata in Abhängigkeit von dem Bedarfssignal umschaltet. Zudem kann situationsbedingt die benötigte Rechenleistung einer virtuellen Maschine garantiert werden.

Durch die Erfindung ergibt sich der Vorteil, dass die Rechenleistung der realen Prozessorkerne variabel oder dynamisch auf die mehreren virtuellen Maschinen aufteilbar ist.

Zu der Erfindung gehören auch Ausführungsformen, durch die sich zusätzliche Vorteile ergeben.

Erfindungsgemäß weist eine der virtuellen Maschinen eine Steuerschnittstelle zum Übertragen des Bedarfssignals aus dieser virtuellen Maschine heraus in die Hypervisoreinrichtung hinein auf. Die Steuerschnittstelle ist dazu eingerichtet, das Bedarfssignal aus einem auf der virtuellen Maschine oder auf einer anderen der virtuellen Maschine ausgeführten Softwareprogramm zu empfangen. Mit anderen Worten kann also ein Softwareprogramm das Bedarfssignal erzeugen und dieses über die Steuerschnittstelle an die Hypervisoreinrichtung übertragen lassen. Somit kann dann die Hypervisoreinrichtung das Bedarfssignal empfangen und das durch das Bedarfssignal geforderte oder ausgewählte Zuordnungsschema aktivieren. Die Übertragung in die Hypervisoreinrichtung mittels der Steuerschnittstelle kann beispielsweise auf der Grundlage eines Shared-Memory (ein für zumindest zwei Programmprozesse zugfreibarer oder freigeschalteter Speicherbereich des Arbeitsspeichers der Prozessoreinrichtung) und/oder über ein Register (beispielsweise ein Prozessorregister) und/oder mittels eines Interrupt übertragen werden. Durch die Steuerschnittstelle ergibt sich der Vorteil, dass der Hypervisorscheduler in Bezug auf die Auswahl des Zuordnungsschemas durch ein Softwareprogramm aus einer virtuellen Maschine heraus gesteuert werden kann.

Einige Ausführungsformen beschäftigten sich mit der Frage, in welcher Form die Anteilsberechnung für den Mitwirkungsanteil durchgeführt werden kann.

Erfindungsgemäß ist durch die Anteilsberechnungsvorschrift der jeweilige Mitwirkungsanteil eines jeweiligen der Applikationsprogramme festgelegt durch einen jeweiligen Bildflächenanteil am Bildinhalt. Je größer also der Bildflächenanteil eines Applikationsprogramms am Bildinhalt ist, desto größer ist der Mitwirkungsanteil. Zusätzlich oder alternativ dazu kann der jeweilige Mitwirkungsanteil festgelegt sein durch eine Veränderungsrate der Graphikdaten des jeweiligen Applikationsprogramms. Je häufiger oder mit höherer Wiederholungsrate oder eine flächenmäßige Veränderung der Graphikdaten oder des Graphikanteils des Applikationsprogramms pro Zeiteinheit ist, desto größer ist der Mitwirkungsanteil. Beispielsweise kann also so der Mitwirkungsanteil eines Applikationsprogramms, das ein Video und/oder eine graphische Animation darstellt, größer eingeschätzt oder bewertet werden als ein Applikationsprogramm, das eine statische, zeitlich unveränderliche Graphik oder ein Foto oder Bild anzeigt. Zusätzlich oder alternativ dazu kann als Mitwirkungsanteil ein flächenmäßiger Beitrag am sichtbar dargestellten Bildvordergrund zugrunde gelegt werden. Der Bildvordergrund kann ein vorbestimmter Teilbereich der Anzeigefläche der Anzeigeeinrichtung sein. Zusätzlich oder alternativ dazu kann als Bildvordergrund der verbleibende sichtbare Bildinhalt sein, der sich nach Überlagern der Graphikdaten der unterschiedlichen Applikationsprogramme ergibt. So kann beispielsweise vorgesehen sein oder es kann vorkommen, dass die Graphikdaten eines Applikationsprogramms nach dem Überlagern aller Graphikdaten überhaupt nicht mehr angezeigt werden, also das Applikationsprogramm von den Graphikdaten zumindest eines anderen Applikationsprogramms verdeckt oder überlagert wird. In diesem Fall ist dann für dieses Applikationsprogramm auch kein Mitwirkungsanteil vorhanden. Die beschriebenen Maße zum Ermitteln des Mitwirkungsanteils haben sich als zuverlässige Indikatoren für die aktuell von dem jeweiligen Applikationsprogramm benötigte Rechenleistung erwiesen. Die beschriebenen Maße können auch kombiniert angewendet werden, beispielsweise mittels einer gewichteten Summierung.

In einer Ausführungsform ist die Gesamtanzahl der Zuordnungsschemata, aus welchen mittels des Bedarfssignals ausgewählt wird, kleiner als 10. Insbesondere ist diese Gesamtanzahl kleiner als 7 oder kleiner als 6 oder 5. Insbesondere können nur zwei oder nur drei Zuordnungsschemata vorgesehen sein. Hierdurch ergibt sich der Vorteil, dass eine Änderungshäufigkeit oder Änderungsrate der Zuordnungsschemata entsprechend gering ist, da die Rasterung möglicher Zuordnungsfälle durch die geringe Gesamtanzahl der Zuordnungsschemata entsprechend grob ist. Dies erspart einen Zeitverlust beim Betrieb der Hypervisoreinrichtung, wie er durch zu häufiges Umschalten verursacht werden kann. Insbesondere erfolgt so ein Umschalten von weniger als beispielsweise einmal pro Minute.

In einer Ausführungsform wird während einer Aktivität eines der Zuordnungsschemata eine statische Bindung jedes der Prozessorkerne zu einer der virtuellen Maschinen beibehalten. Mit anderen Worten ist also während der Aktivität des jeweiligen Zuordnungsschemas vorgesehen, dass sich durchgehend im Verlauf des gesamten Zuordnungsschemas jeder der realen Prozessorkerne für die jeweilige virtuelle Maschine beibehalten oder gebunden ist. Natürlich kann dann innerhalb der virtuellen Maschine ein Wechsel oder Kontextwechsel zwischen einzelnen Prozessen und/oder Threads der virtuellen Maschine erfolgen. Dennoch bleibt der virtuellen Maschine die Rechenleistung jedes durch das Zuordnungsschema zugeordneten realen Prozessorkerns erhalten. Hierdurch wird eine Leistungsschwankung innerhalb der virtuellen Maschinen in Bezug auf die zur Verfügung gestellte Rechenleistung vermieden.

In einer Ausführungsform weisen alle besagten Zuordnungsschemata einen gemeinsamen Zuordnungsanteil auf, durch welchen zumindest einer der virtuellen Prozessorkerne einem der realen Prozessorkerne zugeordnet ist. Mit anderen Worten wird also selbst bei einem Wechsel des Zuordnungsschemas für diesen zumindest einen virtuellen Prozessorkern sichergestellt, dass diesem ein realer Prozessorkern, insbesondere immer derselbe reale Prozessorkern, zugeordnet ist und/oder bleibt. Somit bleibt also auch über einen Wechsel des Zuordnungsschemas hinweg für diesen virtuellen Prozessorkern die Rechenleistung zugeteilt. Hierdurch kann beispielsweise ein sicherheitsrelevantes Softwareprogramm (in Bezug auf saftety und/oder security) durchgehend, unabhängig von dem aktuell ausgewählten Zuordnungsschema mit einer vorbestimmten Rechenleistung garantiert versorgt werden.

In einer Ausführungsform wird das Prinzip des Hypervisors weiter erstreckt, indem das Computersystem zumindest eine Graphikprozessoreinheit oder GPU (graphical processing unit) und/oder zumindest eine Hardwareressource (beispielsweise eine Hardware-Beschleunigungseinheit für eine Videodekodierung/Videocodierung und/oder eine NPU (neural processing unit) durch den Hypervisor Scheduler gemäß dem jeweils aktiven Zuordnungsschema einer der virtuellen Maschinen exklusiv zugeordnet ist, auch eine GPU und/oder eine andere Hardwareressource exklusiv für eine virtuelle Maschine verfügbar gemacht werden und hierbei die Zuordnung durch Wechseln des Zuordnungsschemas auch dynamisch angepasst oder gewechselt werden.

Das beschriebene Computersystem ist insbesondere für den Einsatz in einem Kraftfahrzeug vorteilhaft. Entsprechend umfasst die Erfindung auch ein Kraftfahrzeug mit einer Ausführungsform des erfindungsgemäßen Computersystems.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs mit einer Ausführungsform des erfindungsgemäßen Computersystems;
- Fig. 2: eine schematische Darstellung zur Veranschaulichung unterschiedlicher Zuordnungsschemata, wie sie durch das Computersystem gemäß Fig. 1 realisiert sein können.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

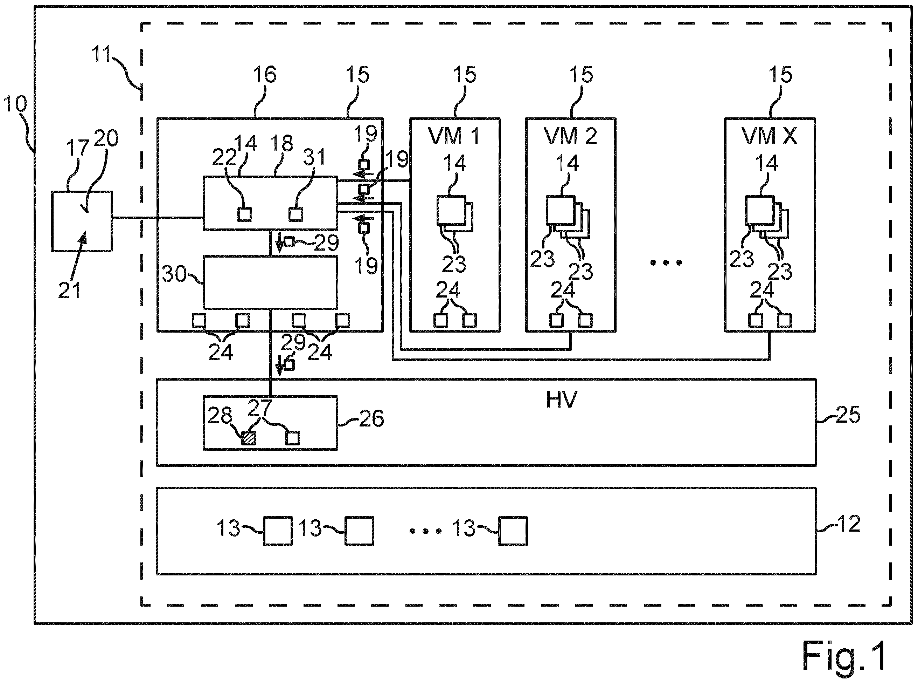

Fig. 1 zeigt ein Kraftfahrzeug 10, bei dem es sich um einen Kraftwagen, insbesondere einen Personenkraftwagen oder Lastkraftwagen, handeln kann. In dem Kraftfahrzeug 10 kann ein Computersystem 11 bereitgestellt sein, das beispielsweise als zentrales Computersystem oder sogenannte Head-Unit ausgestaltet sein kann, um für mehrere unterschiedliche Anwendungen oder Applikationen Rechenleistung bereitstellen zu können. Das Computersystem 11 kann auch unabhängig von dem Kraftfahrzeug 10 bereitgestellt sein.

Das Computersystem 11 kann eine Prozessoreinrichtung 12 aufweisen, welche mehrere Prozessorkerne 13 umfassen kann. Die Prozesskerne 13 können in einer einzelnen CPU oder in einem Cluster aus mehreren CPUs bereitgestellt sein. Um unterschiedliche Anwendungen oder Funktionalitäten bereitstellen zu können, kann vorgesehen sein, dass mehrere unterschiedliche Softwareprogramme 14 in dem Computersystem 11 bereitgestellt und/oder im Betrieb des Computersystems 11 ausgeführt werden. Um die Softwareprogramme 14 gruppenweise gegeneinander abzugrenzen oder einen gegenseitigen Einfluss aufeinander zu verhindern, können mehrere unterschiedliche virtuelle Maschinen 15 (VM1 bis VM X) vorgesehen sein, die auf der Prozessoreinrichtung 12 ausgeführt werden können. Eine der virtuellen Maschinen 15 kann hierbei eine Infrastruktursteuerung 16 darstellen, durch welche insbesondere eine Anzeigeeinrichtung 17 oder mehrere Anzeigeeinrichtung (nicht dargestellt) gesteuert werden können. Hierzu kann in der virtuellen Maschine 15 der Infrastruktursteuerung 16 ein Anzeigesteuerprogramm 18 vorgesehen sein, das aus den Softwareprogrammen 14 Graphikdaten 19 empfangen kann, durch welche ein Bildinhalt 20 auf einer Anzeigefläche 21 der Anzeigeeinrichtung 17 festgelegt werden kann.

Da Graphikdaten 19 mehrere Softwareprogramme 14 vorhanden sind, kann durch das Anzeigesteuerprogramm 18 eine Komposition oder Zusammenstellung 22 der Graphikdaten 19 zum Erzeugen des Bildinhalts 20 vorgesehen sein. Die Softwareprogramme 14 können beispielsweise jeweils ein Applikationsprogramm 23 darstellen, welches beispielweise ein Bedienmenü zum Auswählen und Aktivieren mehrerer Fahrzeugfunktionen und/oder eine Medienwiedergabe (beispielsweise das Abspielen von Audiodaten und/oder Videodaten) und/oder das Surfen im Internet und/oder eine Telefoniefunktionalität bereitstellen können, um nur Beispiele zu nennen. Eine entsprechende Bildausgabe kann mittels der Graphikdaten 19 durch das jeweilige Applikationsprogramm 23 über das Anzeigesteuerprogramm 18 auf der Anzeigeeinrichtung 17 gesteuert werden. Die Anzeigeeinrichtung 17 kann einen jeweiligen Bildschirm beispielsweise einer Mittelkonsole und/oder eines Kombiinstruments und/oder als eine Kopf-Oben-Anzeigeeinheit (Head-up-Display) und/oder einen Beifahrer-Bildschirm und/oder einen Rücksitzbildschirm und/oder einen Türenseitenbildschirm umfassen.

In den virtuellen Maschinen 15 kann jeweils die Prozessoreinrichtung 12 mit ihren Prozessorkernen 13 virtualisiert dargestellt oder repräsentiert sein, indem für jede virtuelle Maschine 15 virtuelle Prozessorkerne 24 bereitgestellt oder implementiert sein können, welche sich für die Softwareprogramme 14 als CPUs oder Prozessorkerne darstellen, auf denen das jeweilige Softwareprogramm 14 ausgeführt wird oder ablaufen kann. Die Anzahl der virtuellen Prozessorkerne 24 kann dabei fest vorgegeben oder unveränderlich sein.

Um eine Zuordnung zwischen den realen Prozessorkernen 13 der Prozessoreinrichtung 12 und den virtuellen Prozessorkernen 24 zu erhalten, kann in dem Computersystem 11 ein Hypervisor oder eine Hypervisoreinrichtung 25 (HV) vorgesehen sein, die beispielsweise auf einer Hardwareschaltung (beispielsweise einem integrierten Schaltkreis oder IC) und/oder auf einer Software basieren kann.

Um hierbei die durch die realen Prozessorkerne 13 verfügbare Rechenleistung flexibel auf die virtuellen Prozessorkerne 24 aufzuteilen, also eine dynamische Anpassung der Zuteilung zu ermöglichen, kann die Hypervisoreinrichtung 25 einen Scheduler für das Zuteilen der realen Prozessorkerne 13 zu den virtuellen Prozessorkernen 24 aufweisen, das heißt einen Hypervisorscheduler 26.

Der Hypervisorscheduler 26 kann die Zuordnung der realen Prozessorkerne 13 zu den virtuellen Prozessorkernen 24 auf der Grundlage eines Zuordnungsschemas 27 vornehmen, wobei zu jedem Zeitpunkt jeweils nur ein Zuordnungsschema 27 als aktives Zuordnungsschema 28 eingestellt ist. Eine herkömmliche Supervisoreinrichtung 25 kann beim Start nur ein einziges Zuordnungsschema 27 ausführen, das heißt es mangelt an dem Hypervisorscheduler 26. Durch Hinzufügen des Hypervisorschedulers 26 kann nun im laufenden Betrieb des Computersystems 11 das Zuordnungsschema 27 gewechselt werden.

Der Wechsel zwischen den Zuordnungsschemata 27 kann dabei in Abhängigkeit von einem Bedarfssignal 29 erfolgen, das der Hypervisorscheduler 26 beispielsweise aus einer der virtuellen Maschinen, beispielsweise der virtuellen Maschine 15 für das Anzeigesteuerprogramm 18 empfangen kann. Hierzu kann in der virtuellen Maschine 15 für das Anzeigesteuerprogramm 18 eine Steuerschnittstelle 30 bereitgestellt sein, die es einem Softwareprogramm, beispielsweise dem Anzeigesteuerprogramm 18, ermöglicht, das Bedarfssignal 29 zu erzeugen und über die Steuerschnittstelle 30 an die Hypervisoreinrichtung 25 und dort insbesondere dem Hypervisorscheduler 26 bereitzustellen oder zu übermitteln.

Beispielsweise kann das Anzeigesteuerprogramm 18 ermitteln, welcher Rechenbedarf für die einzelnen Applikationsprogramme 23 zum Erzeugen der Graphikdaten 19 aktuell notwendig ist. Hierzu kann von dem Anzeigesteuerprogramm 18 beispielsweise eine Anteilsberechnungsvorschrift 31 ausgeführt oder zugrunde gelegt werden, welches ermittelt, wie groß ein jeweiliger Mitwirkungsanteil des jeweiligen Applikationsprogramms 23 am Bildinhalt 20 ist. Entsprechend kann dann ein Zuordnungsschema 27 mittels des Bedarfssignals 29 ausgewählt werden, welches gemäß dem Mitwirkungsanteil mehr Rechenleistung der realen Prozessorkerne 13 der jeweiligen virtuellen Maschine 15 zuordnet, auf welcher das jeweilige Applikationsprogramm 23 läuft oder ausgeführt wird. Je höher also ein Mitwirkungsanteil eines Applikationsprogramms 23 ist, desto mehr Rechenleistung bekommt dessen virtuelle Maschine 15 zugeordnet. Die Mitwirkungsanteile mehrerer Applikationsprogramme 23 einer virtuellen Maschine 15 summieren sich entsprechend zu einem Gesamtmitwirkungsanteil pro virtuelle Maschine 15 auf.

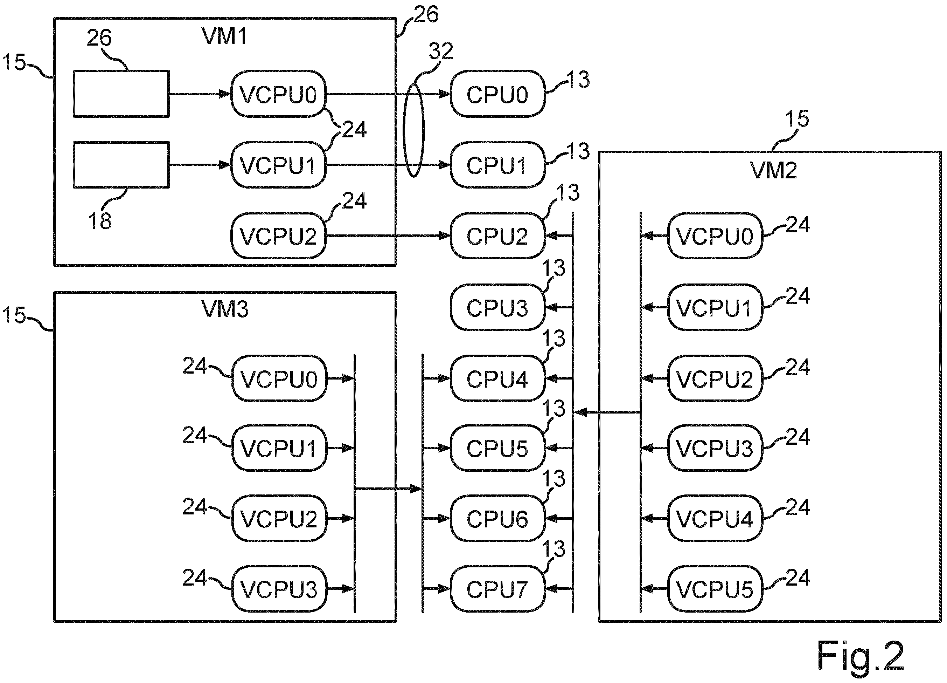

In Fig. 2 ist veranschaulicht, wie mittels mehrerer der Zuordnungsschemata eine wechselnde Zuordnung von realen Prozessorkernen 13 zu virtuellen Prozessorkernen 24 mehrerer unterschiedlicher virtueller Maschinen 15 erfolgen kann. Die virtuellen Maschinen 15 sind hier durch die Bezeichnungen VM1, VM2, VM3 unterschieden, was eine beispielhafte Gesamtanzahl von X=3 ergibt. Die virtuelle Maschine VM1 kann beispielsweise die Verwaltung des Computersystems 11 durchführen und hierzu beispielsweise eine Software-Version des Hypervisorscheduler 26 und/oder das Anzeigesteuerprogramm 18 aufweisen.

Um hierbei eine Echtzeitfähigkeit sicherzustellen und/oder eine garantierte Rechenleistung bereitzustellen, kann für jede der möglichen Zuordnungsschemata 27 vorgesehen sein, dass ein allen Zuordnungsschemata 27 gemeinsamer Zuordnungsanteil 32 vorgesehen ist, durch welchen den virtuellen Prozessorkernen 24 der virtuellen Maschine VM1 mit den Bezeichnungen VCPU0 und VCPU1 (diese sind nur beispielhaft angegeben) stets ein jeweiliger realer Prozessorkern 13 (z.B. CPU0 und CPU1) zugeordnet ist.

Für den weiteren virtuellen Prozessorkern (VCPU2) der virtuellen Maschine VM1 und die virtuellen Prozessorkerne 24 der übrigen virtuellen Maschinen VM2 und VM3 kann hier ein Zuordnungswechsel zwischen den realen Prozessorkernen 13 und den virtuellen Prozessorkernen 24 in Abhängigkeit vom aktiven Zuordnungsschema 27 vorgesehen sein.

So können beispielsweise den sechs virtuellen Prozessorkernen 24 (VCPU0 bis VCPU5) der virtuellen Maschine VM2 sechs mögliche reale Prozessorkerne 13 (CPU2 bis CPU7) zugeordnet werden, wobei die Anzahl der zugeordneten realen CPU Prozessorkerne 13 je nach Zuordnungsschema 27 unterschiedlich sein kann. Auch für die vier virtuellen Prozessorkerne 24 (VCPU0 bis VCPU3) der virtuellen Maschine VM3 kann vorgesehen sein je nach Zuordnungsschema 27 eine bis vier reale Prozessorkerne 13 (in Fig. 2 die Prozessorkerne CPU4 bis CPU7) zuzuordnen.

Wenn ein realer Prozessorkern 13 einer oder mehreren virtueller Prozessorkernen 24 zugeordnet ist, werden Rechenoperationen des jeweiligen virtuellen Prozessorkerns 24 durch den zumindest einen zugeordneten realen Prozessorkern 13 ausgeführt oder realisiert. Das jeweilige Softwareprogramm einer virtuellen Maschine 15 sieht dabei nur die virtuellen Prozessorkerne 24.

Die in Fig. 2 dargestellte Konstellation kann für die virtuelle Maschine VM1 die höchste Priorität vorsehen, das heißt eine Priorität von den virtuellen Maschinen VM2, VM3 ist geringer.

Jedes Zuordnungsschema 27 kann in der aus dem Stand der Technik bekannt weise ausgestaltet sein. Allerdings ist aus dem Stand der Technik das Umschalten zwischen mehreren Zuordnungsschemata 27 mittels eines Hypervisorschedulers 26 nicht bekannt.

Das Umschalten kann nicht nur für die beschriebenen realen Prozessorkerne vorgesehen sein, sondern es kann eine Erweiterung dahingehend vorgesehen sein, dass durch die Zuordnungsschemata 27 auch zumindest eine GPU als virtuelle GPU in jeder der virtuellen Maschinen 15 bereitgestellt wird und eine reale GPU durch ein Zuordnungsschema 27 einer der virtuellen GPUs zugeordnet wird. Zusätzlich oder alternativ dazu kann eine Zuordnung durch ein Zuordnungsschema auch für eine weitere Rechenressource oder eine andere Rechenressource des Computersystems 11 vorgesehen sein, oder allgemein eine Hardwareressource, wie beispielsweise einen Hardware-Beschleuniger für eine Videodekodierung und/oder eine NPU. Diese sind dann auch jeweils als virtuelle Hardwareressource in den virtuellen Maschinen 15 repräsentiert, um so eine Zuordnung einer realen Hardware-Ressource zu der virtuellen Ressource mittels eines Zuordnungsschemas und der Hypervisoreinrichtung 25 zu ermöglichen. Das Umschalten zwischen unterschiedlichen Zuordnungsschemata kann beispielsweise erfolgen, indem eine Verarbeitung von Programminstruktionen auf einigen oder allen realen Prozessorkernen angehalten wird und eine Zuteilung der virtuellen Maschinen zu den realen Prozessorkernen gemäß dem neuen Zuordnungsschema erfolgt. Danach kann die Verarbeitung in den realen Prozessorkernen wieder gestartet werden.

Insgesamt zeigen die Beispiele, wie durch die Erfindung durch einen Hypervisorscheduler 26 eine Scheduling von virtuellen Maschinen 15 in Abhängigkeit von einem Rechenbedarf für die Berechnung eines Bildinhalts 20 bereitgestellt werden kann.

## Patentansprüche

1. Computersystem (11) für ein Kraftfahrzeug (10), aufweisend:
- eine Prozessoreinrichtung (12) mit mehreren schaltungstechnisch realisierten, realen Prozessorkernen (13),
- mehrere virtuelle Maschinen (15), von denen jede jeweils zumindest einen virtuellen Prozessorkern (24) zum Ausführen von Softwareprogrammen (14) aufweist, sodass innerhalb der virtuellen Maschine (15) eine vorbestimmte, feste Anzahl an virtuellen Prozessorkernen (24) bereitsteht, wobei eine Gesamtanzahl der virtuellen Prozessorkerne (14) größer als eine Gesamtanzahl der realen Prozessorkerne (13) ist,
- eine Hypervisoreinrichtung (25), die dazu eingerichtet ist, die virtuellen Maschinen (15) auf der Prozessoreinrichtung (12) gleichzeitig zu betreiben und hierzu die realen Prozessorkerne (13) den virtuellen Maschinen (15) gemäß einem vorbestimmten Zuordnungsschema (27) exklusiv zuzuordnen, sodass in jeder virtuellen Maschine (15) eine Rechenleistung von deren zumindest einem virtuellen Prozessorkern (24) durch den zumindest einen realen Prozessorkern (13), welcher der jeweiligen virtuellen Maschine (15) exklusiv zugeordnet ist, realisiert ist, wobei eine Zuordnung der realen Prozessorkerne (13) zu den virtuellen Prozessorkernen (24) auf der Grundlage eines Zuordnungsschemas (27) erfolgt,
wobei in der Hypervisoreinrichtung (25) ein Hypervisorscheduler (26) bereitgestellt ist, durch welchen zusätzlich zu dem Zuordnungsschema (27) zumindest ein weiteres Zuordnungsschema (27), welches eine weitere exklusive Zuordnung der realen Prozessorkerne (13) zu den virtuellen Maschinen (15) vorsieht, bereitgestellt ist und der Hypervisorscheduler (26) dazu eingerichtet ist, zwischen den Zuordnungsschemata (27) in Abhängigkeit von einem Bedarfssignal (29) im Betrieb des Computersystems (11) umzuschalten, wobei
jedes Zuordnungsschema (27) festlegt, welcher reale Prozessorkern (13) welcher virtuellen Maschine (15) zum Betreiben von deren virtuellen Prozessorkernen (24) zugeordnet wird, und
eine Schaltung und/oder eine Software in dem Hypervisorscheduler (26) bereitgestellt ist, die in Abhängigkeit von einem Bedarf an Rechenleistung eine Aufteilung der realen Prozesskerne (13) auf die virtuellen Maschinen (15) im Betrieb anpasst,
**dadurch gekennzeichnet, dass**
eine der virtuellen Maschinen (15) ein Anzeigesteuerprogramm (18) aufweist, das dazu eingerichtet ist, auf einer Anzeigeeinrichtung (17) einen Bildinhalt (20) auf der Grundlage von Graphikdaten (19) einzustellen, wobei zum Erzeugen der Graphikdaten (19) in den virtuellen Maschinen (15) Applikationsprogramme (23) vorgesehen sind, und das Anzeigesteuerprogramm (18) dazu eingerichtet ist, auf der Grundlage einer vorbestimmten Anteilsberechnungsvorschrift (31) einen jeweiligen Mitwirkungsanteil der Applikationsprogramme (23) an dem Bildinhalt (20) zu ermitteln und mittels des Bedarfssignals (29) die Rechenleistung der realen Prozessorkerne (13) gemäß dem jeweiligen ermittelten Mitwirkungsanteil auf die virtuellen Maschinen (15) aufzuteilen.

2. Computersystem (11) nach Anspruch 1, wobei eine der virtuellen Maschinen (15) eine Steuerschnittstelle (30) zum Übertragen des Bedarfssignals (29) aus dieser virtuellen Maschine (15) heraus in die Hypervisoreinrichtung (25) hinein aufweist, wobei die Steuerschnittstelle (30) dazu eingerichtet ist, das Bedarfssignal (29) aus einem auf der virtuellen Maschine (15) oder einer anderen der virtuellen Maschinen (15) ausgeführten Softwareprogramm (14) zu empfangen.

3. Computersystem (11) nach einem der vorhergehenden Ansprüche, wobei die Anteilsberechnungsvorschrift (31) den jeweiligen Mitwirkungsanteil eines jeweiligen der Applikationsprogramme (23) festlegt durch:
- einen jeweiligen Bildflächenanteil am Bildinhalt (20),
- eine Veränderungsrate der Graphikdaten des jeweiligen Applikationsprogramms (23),
- einem Beitrag am sichtbar dargestelltem Bildvordergrund.

4. Computersystem (11) nach einem der vorhergehenden Ansprüche, wobei eine Gesamtanzahl der Zuordnungsschemata (27) kleiner als 10 ist.

5. Computersystem (11) nach einem der vorhergehenden Ansprüche, wobei während einer Aktivität eines der Zuordnungsschemata (27) eine statische Bindung jedes der realen Prozessorkerne (13) zu einer der virtuellen Maschinen (15) beibehalten wird.

6. Computersystem (11) nach einem der vorhergehenden Ansprüche, wobei alle Zuordnungsschemata (27) einen gemeinsamen Zuordnungsanteil (32) aufweisen, durch welchen zumindest einer der virtuellen Prozessorkerne (24) jeweils einem der realen Prozessorkerne (13) zugeordnet ist.

7. Computersystem (11) nach einem der vorhergehenden Ansprüche, wobei das Computersystem (11) zumindest eine Graphik-Prozessor-Einheit, GPU, und/oder zumindest eine Hardwareressource aufweist, die durch den Hypervisorscheduler (26) gemäß dem jeweils aktiven Zuordnungsschema (28) einer der virtuellen Maschinen (15) exklusiv zugeordnet ist, und wobei die Hardwareressource eine Rechenressource des Computersystems (11) und/oder einen Hardware-Beschleuniger für eine Videodekodierung und/oder eine neurale Verarbeitungseinheit darstellt.

8. Kraftfahrzeug (10) mit einem Computersystem (11) nach einem der vorhergehenden Ansprüche.

## Claims

1. A computer system (11) for a motor vehicle (10), comprising:
- a processor device (12) with multiple real processor cores (13) realized by circuitry,
- multiple virtual machines (15), each of which respectively comprises at least one virtual processor core (24) for executing software programs (14), such that a predetermined, fixed number of virtual processor cores (24) is provided within the virtual machine (15), wherein a total number of the virtual processor cores (14) is greater than a total number of the real processor cores (13),
- a hypervisor device (25), which is configured to operate the virtual machines (15) on the processor device (12) at the same time and hereto to exclusively associate the real processor cores (13) with the virtual machines (15) according to a predetermined association scheme (27), such that, in each virtual machine (15), a computing power of the at least one virtual processor core (24) thereof is realized by the at least one real processor core (13), which is exclusively associated with the respective virtual machine (15), wherein an association of the real processor cores (13) with the virtual processor cores (24) is effected based on an association scheme (27), wherein a hypervisor scheduler (26) is provided in the hypervisor device (25), by which at least one further association scheme (27), which provides a further exclusive association of the real processor cores (13) with the virtual machines (15), is provided in addition to the association scheme (27), and the hypervisor scheduler (26) is configured to switch between the association schemes (27) depending on a demand signal (29) in the operation of the computer system (11), wherein
each association scheme (27) specifies, which real processor core (13) is associated with which virtual machine (15) for operating the virtual processor cores (24) thereof, and
a circuit and/or software is provided in the hypervisor scheduler (26), which adapts an allocation of the real processor cores (13) to the virtual machines (15) in the operation depending on a demand of computing power, **characterized in that**
one of the virtual machines (15) comprises a display control program (18), which is configured to adjust an image content (20) on a display device (17) based on graphics data (19), wherein application programs (23) are provided in the virtual machines (15) for generating the graphics data (19), and the display control program (18) is configured to ascertain a respective involvement proportion of the application programs (23) in the image content (20) based on a predetermined proportion calculation rule (31) and to allocate the computing power of the real processor cores (13) to the virtual machines (15) according to the respective ascertained involvement proportion by means of the demand signal (29).

2. The computer system (11) according to claim 1, wherein one of the virtual machines (15) comprises a control interface (30) for transmitting the demand signal (29) from this virtual machine (15) into the hypervisor device (25), wherein the control interface (30) is configured to receive the demand signal (29) from a software program (14) executed on the virtual machine (15) or another one of the virtual machines (15).

3. The computer system (11) according to any one of the preceding claims, wherein the proportion calculation rule (31) specifies the respective involvement proportion of a respective one of application programs (23) by:
- a respective image surface proportion of the image content (20),
- a rate of change of the graphics data of the respective application program (23),
- a contribution to the visibly presented image foreground.

4. The computer system (11) according to any one of the preceding claims, wherein a total number of the association schemes (27) is less than 10.

5. The computer system (11) according to any one of the preceding claims, wherein a static linkage of each of the real processor cores (13) to one of the virtual machines (15) is maintained during an activity of one of the association schemes (27).

6. The computer system (11) according to any one of the preceding claims,
wherein all of the association schemes (27) comprise a common association proportion (32), by which at least one of the virtual processor cores (24) is respectively associated with one of the real processor cores (13).

7. The computer system (11) according to any one of the preceding claims,
wherein the computer system (11) comprises at least one graphics processor unit, GPU, and/or at least one hardware resource, which is exclusively associated with one of the virtual machines (15) by the hypervisor scheduler (26) according to the respectively active association scheme (28), and wherein the hardware resource represents a computing resource of the computer system (11) and/or a hardware accelerator for video decoding and/or a neural processing unit.

8. A motor vehicle (10) with a computer system (11) according to any one of the preceding claims.

## Revendications

1. Système informatique (11) pour un véhicule à moteur (10), comportant :
- un dispositif à processeur (12) comportant plusieurs coeurs de processeurs réels (13), mis en oeuvre dans des circuits,
- plusieurs machines virtuelles (15), dont chacune comporte respectivement au moins un coeur de processeur virtuel (24) pour exécuter des programmes logiciels (14), de telle sorte qu'à l'intérieur de la machine virtuelle (15), un nombre fixe prédéfini de coeurs de processeurs virtuels (24) est disponible, un nombre total des coeurs de processeurs virtuels (14) étant supérieur à un nombre total des coeurs de processeurs réels (13),
- un hyperviseur (25) configuré pour faire fonctionner simultanément les machines virtuelles (15) sur le dispositif à processeur (12) et pour affecter ainsi de manière exclusive les coeurs de processeurs réels (13) aux machines virtuelles (15) selon un schéma d'allocation (27) prédéfini, de telle sorte que dans chaque machine virtuelle (15), une puissance de calcul de ses au moins un coeur de processeur virtuel (15) est réalisée par le au moins un coeur de processeur réel (13) qui est exclusivement affecté à la machine virtuelle (15) respective, les coeurs de processeurs réels (15) étant affectés aux coeurs de processeurs virtuels (24) sur la base d'un schéma d'allocation (27),
un gestionnaire de machine virtuelle (26) étant inclus dans l'hyperviseur (25), gestionnaire au moyen duquel, en plus du schéma d'allocation (27), est fourni au moins un schéma d'allocation supplémentaire (27) qui prévoit une affectation exclusive supplémentaire des coeurs de processeurs réels (13) aux machines virtuelles (15), et le gestionnaire de machine virtuelle (26) étant configuré pour changer les schémas d'affectation (27) en fonction d'un signal de demande (29) pendant le fonctionnement du système informatique (11),
chaque schéma d'allocation (27) définissant quel coeur de processeur réel (13) est affecté à quelle machine virtuelle (15) pendant le fonctionnement des coeurs de processeurs virtuels (24) et
un circuit et/ou un logiciel étant disponible dans le gestionnaire de machine virtuelle (26), lequel circuit et/ou logiciel adapte une distribution des coeurs de processeurs réels (13) aux machines virtuelles (15) pendant le fonctionnement, en fonction d'une demande en puissance de calcul,
**caractérisé en ce que**
l'une des machines virtuelles (15) comporte un programme de commande d'affichage (18) configuré pour régler un contenu d'image (20) sur un dispositif d'affichage (17) sur la base de données graphiques (19), des programmes d'application (23) étant prévus pour générer les données graphiques (19) dans les machines virtuelles (15), et le programme de commande d'affichage (18) étant configuré pour déterminer, sur la base d'une règle de calcul de proportion prédéfinie (31), une part de contribution respective des programmes d'application (23) au contenu d'image (20), et pour allouer aux machines (15) respectives, au moyen du signal de demande (29), la puissance de calcul des coeurs de processeurs réels (13) en fonction de la part de contribution déterminée respective.

2. Système informatique (11) selon la revendication 1, dans lequel l'une des machines virtuelles (15) comporte une interface de commande (30) pour transmettre le signal de demande (29) à partir de cette machine virtuelle (15) dans l'hyperviseur (25), l'interface de commande (30) étant configurée pour recevoir le signal de demande (29) provenant d'un programme logiciel (14) exécuté sur la machine virtuelle (15) ou sur une autre des machines virtuelles (15).

3. Système informatique (11) selon l'une des revendications précédentes, dans lequel la règle de calcul de proportion (31) définit la part de contribution respective de l'un des programmes d'application (23) respectifs par :
- une part de surface d'image respective dans le contenu d'image (20),
- une vitesse de changement des données graphiques du programme d'application (23) respectif,
- une contribution à l'arrière-plan d'image affiché de manière visible.

4. Système informatique (11) selon l'une des revendications précédentes, dans lequel un nombre total des schémas d'affectation (27) est inférieur à 10.

5. Système informatique (11) selon l'une des revendications précédentes, dans lequel pendant une activité de l'un des schémas d'affectation (27), un lien statique de chacun des coeurs de processeurs réels (15) avec l'une des machines virtuelles (15) est maintenu.

6. Système informatique (11) selon l'une des revendications précédentes, dans lequel tous les schémas d'affectation (27) ont une partie d'affectation commune (32), au moyen de laquelle au moins un des coeurs de processeurs virtuels (24) est respectivement associé à l'un des coeurs de processeurs réels (13).

7. Système informatique (11) selon l'une des revendications précédentes, dans lequel le système informatique (11) comporte au moins une unité centrale graphique, GPU, et/ou au moins une ressource matérielle qui est affectée de manière exclusive par le gestionnaire de machine virtuelle (26) à l'une des machines virtuelles (15) respectivement, en fonction du schéma d'allocation (28) actif, et la ressource matérielle représente une ressource de calcul du système informatique (11) et/ou un accélérateur de matériel pour un décodage vidéo et/ou une unité de traitement neuronal.

8. Véhicule à moteur (10) comportant un système informatique (11) selon l'une des revendications précédentes.
